# EUROPÄISCHE PATENTSCHRIFT

(11) **EP 1 387 783 B1**
(45) Veröffentlichungstag und Bekanntmachung des Hinweises auf die Patenterteilung: **27.10.2004**
(21) Anmeldenummer: 02738053.4
(22) Anmeldetag: 10.05.2002
(51) Int. Cl.: B60R 25/02

(54) **MANUELL BETÄTIGBARER ZÜNDANLASSSCHALTER FÜR EINE SCHLÜSSELLOSE MOTORSTARTBERECHTIGUNGSKONTROLLEINRICHTUNG EINES KRAFTFAHRZEUGES**
MANUALLY ACTUATABLE IGNITION STARTER SWITCH FOR A KEYLESS UNIT FOR CONTROLLING THE ENGINE STARTING AUTHORISATION OF A VEHICLE
DEMARREUR A COMMANDE MANUELLE POUR UNITE SANS CLE SERVANT AU CONTROLE D'AUTORISATION DE DEMARRAGE DE MOTEUR D'UN VEHICULE AUTOMOBILE

(30) Priorität: 15.05.2001 DE 20108149 U
(43) Veröffentlichungstag der Anmeldung: 11.02.2004
(73) Patentinhaber: Leopold Kostal GmbH & Co. KG, 58507 Lüdenscheid (DE)
(72) Erfinder: KETZER, Thomas, 58509 Lüdenscheid (DE); SEIDEL, Andreas, 58513 Lüdenscheid (DE); WESSENDORF, Benno, 58515 Lüdenscheid (DE)
(86) Internationale Anmeldenummer: PCT/EP2002/005155
(87) Internationale Veröffentlichungsnummer: WO 2002/092404

(56) Entgegenhaltungen:
- EP-A- 0 706 919
- EP-A- 1 029 757
- US-A- 4 945 740
- US-A- 5 521 443

## Beschreibung

Die Erfindung betrifft einen manuell betätigbaren Zündanlaßschalter für eine schlüssellose Motorstartberechtigungskontrolleinrichtung eines Kraftfahrzeuges mit einem Stellglied, durch das ein manuelles Starten und Stoppen des Motors sowie eine mechanische Ent- und Verriegelung der Drehbewegung des Lenkrades bewirkt werden kann, auf welches Stellglied nach einer Bewegung des Stellgliedes aus seiner Ausgangsstellung heraus zum Starten des Motors ein Sperriegel einer ansteuerbaren Verriegelungseinrichtung zum Sperren einer Zurückstellung des Stellgliedes in seine Ausgangsstellung dergestalt wirkt, daß eine Entriegelung zur Freigabe eines Zurückstellens des Stellgliedes in seine Ausgangsstellung von dem Vorhandensein eines von einer Betätigung des Stellgliedes unabhängigen Steuerbefehls erfolgt, wobei die Verriegelungseinrichtung mit dem Sperriegel gegen einen Anschlag des Stellgliedes wirkt.

Schlüssellose Motorstartberechtigungskontrolleinrichtungen sind bekannt und werden bei Kraftfahrzeugen zum Erhöhen der Bediensicherheit sowie des Bedienkomforts eingesetzt. Zu einer solchen Motorstartberechtigungskontrolleinrichtung kann ebenfalls ein manuell betätigbarer Zündanlaßschalter gehören. Der Zündanlaßschalter umfaßt eine Aufnahme zum Einsetzen eines mit einer Handhabe versehenen Stellgliedes, durch welches ein Motorstart, ein Motorstop sowie eine mechanische Ent- und Verriegelung der Drehbewegung des Lenkrades durch entsprechende Bewegung des Stellgliedes bewirkt werden kann.

Ein solcher Zündanlaßschalter ist bekannt aus DE 299 02 77 U1. Bei dem Gegenstand dieses Dokumentes wirkt auf das Stellglied nach einer Betätigung desselben zum Starten des Motors ein Sperriegel einer ansteuerbaren Verriegelungseinrichtung, durch den ein Zurückstellen des Stellgliedes in seine Ausgangsstellung verhindert ist. Eine Entriegelung zur Freigabe dieser Verriegelung erfolgt in Abhängigkeit von dem Vorhandensein eines von der Betätigung des Stellgliedes unabhängigen Steuerbefehls. Zu diesem Zweck ist die Verriegelungseinrichtung entsprechend ansteuerbar geschaltet, wobei eine Ansteuerung durch die Motorstartberechtigungskontrolleinrichtung erfolgt. Der Sperriegel der Verriegelungseinrichtung wirkt gegen einen Anschlag des Stellgliedes. Mit einer solchen Maßnahme wird beispielsweise bei Kraftfahrzeugen mit Automatikgetrieben sichergestellt, daß das Stellglied in seine Ausgangsstellung erst dann gebracht werden kann, wenn sich der Gangwahlhebel in der Parkposition befindet.

Die Verriegelungseinrichtungen umfassen in aller Regel einen Elektromagneten, der passiv das Stellglied gegenüber einer Zurückstellung in seine Ausgangsstellung verriegelt. Bei einer Ansteuerung des Elektromagneten wird durch diesen der in das Stellglied eingreifende Sperriegel zum Freigeben des Stellgliedes bewegt. Erst nach dem Zurückstellen des Stellgliedes in seine Ausgangsstellung erfolgt eine Verriegelung der Drehbewegung des Lenkrades, beispielsweise durch Einfahren des Sperriegels in die Lenkspindel.

Nachteilig bei einem solchen vorbekannten Zündanlaßschalter ist, daß ein Zurückstellen des Stellgliedes bei einem System- oder Stromausfall nicht möglich ist. Folglich kann bei einem solchen Kraftfahrzeug die Drehbarkeit des Lenkrades nicht verriegelt werden, so daß dieses Kraftfahrzeug zumindest bezüglich seiner Lenkverriegelung bei einem Verlassen des Kraftfahrzeuges unverriegelt verbleibt. Dies ist jedoch unbefriedigend.

Das Dokument EP-A-706919 offenbart einen Zündanlaßschalter, wobei ein Druckknopf benutzt wird, um ein Zurückstellen des Stellgliedes bei einem Systemausfall zu ermöglichen.

Ausgehend von diesem diskutierten Stand der Technik liegt der Erfindung daher die Aufgabe zugrunde, einen eingangs genannten gattungsgemäßen Zündanlaßschalter dergestalt weiterzubilden, daß mit diesem grundsätzlich ein Zurückstellen des Stellgliedes in seine Ausgangsstellung und eine entsprechende Verriegelung der Lenkspindel auch bei einem System- oder Stromausfall möglich ist.

Diese Aufgabe wird erfindungsgemäß dadurch gelöst, daß das Stellglied einen mit einer vorbestimmten Kraft überwindbaren Anschlag aufweist, gegen den der Sperriegel der Verriegelungseinrichtung nach einer Bewegung des Stellgliedes aus seiner Ausgangsstellung zum Starten des Motors zum Sperren der Zurückstellung des Stellgliedes in seine Ausgangsstellung wirkt.

Bei dem erfindungsgemäßen Zündanlaßschalter ist vorgesehen, daß das Stellglied einen Anschlag, gegen den der Sperriegel der Verriegelungseinrichtung wirkt, aufweist, der bei Anliegen einer vorbestimmten Kraft, beispielsweise eines Drehmomentes überwindbar ist. Dieser Anschlag bewirkt, daß grundsätzlich ein Zurückstellen des Stellgliedes in seine Ausgangsstellung durch den Anschlag verhindert ist. Nur wenn auf das Stellglied eine besondere, das Übliche übersteigende Kraft ausgeübt wird, kann der Anschlag überwunden werden, so daß das Stellglied in seine Ausgangsstellung zurückgestellt und damit oder anschließend auch die gewünschte Lenkradverriegelung ausgelöst werden kann.

In einem bevorzugten Ausführungsbeispiel ist als Stellglied ein Druck-Drehknopf eingesetzt, der zunächst ausgehend von seiner Ausgangsstellung längsachsial zu bewegen ist, bevor mit diesem eine Lenkradentriegelung und ein Motorstart bewirkt werden kann. Bei einem solchen Stellglied trägt dieses zweckmäßigerweise einen Anschlagnocken, der mit dem Sperriegel der Verriegelungseinrichtung zusammenwirkt. Der Anschlagnocken umfaßt zum einen eine Steuerflanke, mit der der Sperriegel aus seiner verriegelnden Stellung zurück bewegt werden kann und umfaßt femer ein den überwindbaren Anschlag bildendes Federelement, gegen welches der Sperriegel der Verriegelungseinheit wirkt. Als Federelement kann beispielsweise eine geschlitzte Blattfeder eingesetzt sein, deren Schlitzweite geringer ist als der Durchmesser des Sperriegels. Bei dieser Ausgestaltung sind entsprechend der Federkraft durch die geschlitzte Blattfeder zunächst die beiden Hälften der Blattfeder durch den Sperriegel auseinander zu bewegen, bevor dieser den durch die Blattfeder gebildeten Anschlag passieren kann.

Nachfolgend ist die Erfindung anhand eines Ausführungsbeispieles unter Bezugnahme auf die beigefügten Figuren beschrieben. Es zeigen:
- **Fig. 1:**: Eine dreidimensionale Darstellung einer auf einen Anschlagnocken einer drehbaren Aufnahme eines Zündanlaßschalters wirkenden Verriegelungseinrichtung und
- **Fig. 2:**: Eine schematisierte Schnittdarstellung durch die Anschlaganordnung der Figur 1.

Ein ansonsten nicht näher dargestellter manuell betätigbarer Zündanlaßschalter umfaßt einen Anschlagnocken 1, der in nicht näher dargestellter Art und Weise drehfest mit einem Stellglied des Zündanlaßschalters verbunden ist. Bei diesem Ausführungsbeispiel ist das Stellglied des Zündanlaßschalters als Aufnahme zum Einsetzen eines Schlüssels ausgebildet. Der Schlüssel kann als mechanischer Schlüssel wirken oder einen elektronischen Schlüssel darstellen, mit dem über eine kraftfahrzeugseitige Sende-Empfangs-Einrichtung eine Fahrberechtigungsabfrage durchgeführt wird. Der Anschlagnocken 1 dient zum Verriegeln des als Aufnahme ausgebildeten Stellgliedes des Zündanlaßschalters, so daß nach einer ersten Betätigung des Stellgliedes zum Starten des Motors eine Zurückstellung in seiner Ausgangsstellung verhindert ist. Zu diesem Zweck wirkt zusammen mit dem Anschlagnocken 1 eine Verriegelungseinrichtung 2, die bei dem dargestellten Ausführungsbeispiel als Elektromagnet ausgebildet ist. Die Verriegelungseinrichtung 2 verfügt über einen Sperriegel 3, der passiv mit dem Anschlagnocken 1 zum Sperren der beschriebenen Zurückstellbewegung zusammenwirkt. Bei einer Betätigung der Verriegelungseinrichtung 2 wird der Sperriegel 3 zurückgefahren, damit das Stellglied des Zündanlaßschalters in seine Ausgangsstellung zurück gestellt und anschließend der Schlüssel abgezogen werden kann, an welche Abziehbewegung gleichfalls das Einrasten einer Lenkradverriegelung gekoppelt ist. Der Anschlagnocken 1 trägt eine geschlitzte Blattfeder 4 mit einer Anschlagseite 5, die den Anschlag für den Sperriegel 3 der Verriegelungseinrichtung 2 bildet. Die Blattfeder 4 überspannt eine Steuerflanke 6 des Anschlagnockens 1. Die Steuerflanke 6 ist bei dem Ausführungsbeispiel als gerundete Kante ausgebildet.

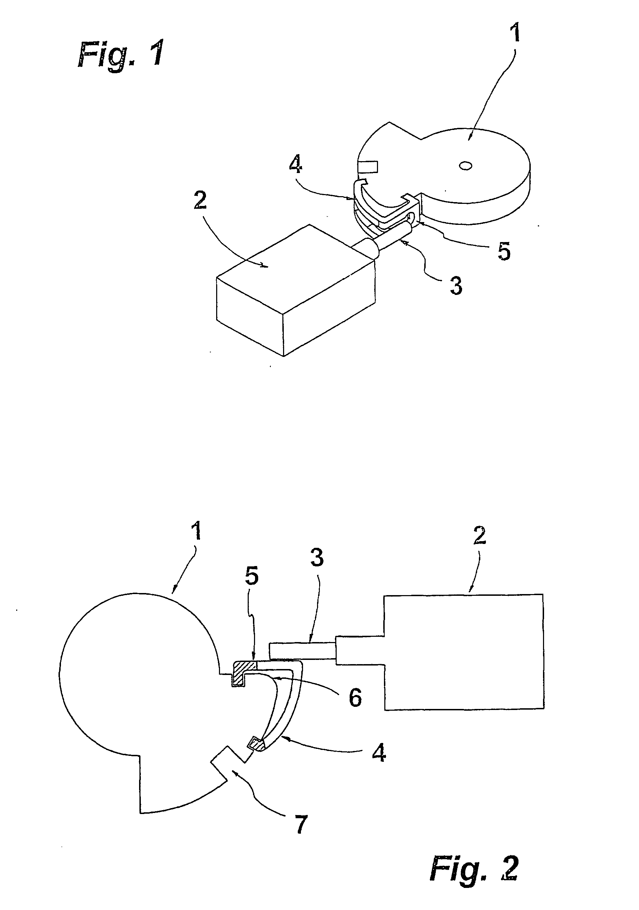

Die lichte Weite des Schlitzes der Blattfeder 4 ist geringer als der Durchmesser des Sperriegels 3, so daß durch die Blattfeder 4 grundsätzlich ein Anschlag für den Sperriegel 3 der Verriegelungseinrichtung 2 gegeben ist, wie dies aus der Sperrsituation der Figur 1 und der Figur 2 erkennbar ist. Bei Anliegen eines eine normale Betätigung des in die Aufnahme des Sperriegels eingesetzten Schlüssels übersteigenden Drehmomentes, kann das Stellglied mit seiner Anschlagnocke 1 an dem Sperriegel 3 der Verriegelungseinrichtung 2 vorbei bewegt werden. Bei Anliegen eines solchen Drehmomentes werden die beiden Teile der Blattfeder 4 auseinander bewegt, so daß die Schlitzweite sich vergrößert und der Sperriegel 3 durch diese auseinander gedrückten Teile der Blattfeder 4 hindurch passieren kann. Bei diesem Vorgang kommt der Sperriegel 3 in Kontakt mit der Steuerflanke 6 des Anschlagnockens 1, so daß der passive, unter Federvorspannung stehende Sperriegel 3 der Verriegelungseinrichtung 2 in Richtung des Elektromagneten bewegt wird. Der Sperriegel 3 schnappt nach ausreichender Drehbewegung des Anschlagnocken 1 in eine Drehsperre 7 des Anschlagnockens 1 ein, welche Position die Ausgangsstellung des Stellgliedes darstellt. Dieser Bewegungsablauf kann auch an dem schematisierten Querschnitt der Figur 2 nachvollzogen werden.

Zum verbesserten Zusammenwirken zwischen dem Sperriegel 3 und der Blattfeder 4 ist der Sperriegel 3 gerundet ausgebildet. Dadurch wird ein Eindringen des Sperriegels 3 in den Schlitz der Blattfeder 4 erleichtert.

Der Sperriegel 3 wird aus der Drehsperre 7 durch den Elektromagneten der Verriegelungseinrichtung 2 herausbewegt, wenn der in die Aufnahme des Stellgliedes eingesetzte Schlüssel als berechtigt erkannt worden ist. Dies kann im Rahmen einer direktionalen Kommunikation mit einer kraftfahrzeugseitigen Sende-Empfangs-Einrichtung und einem in dem Schlüssel enthaltenen Transponder geschehen. In diesem Falle ist es zweckmäßig, wenn das Stellglied in einer ersten Bewegung längsachsial bewegt wird, durch welche Bewegung der Frage-Antwort-Dialog zur Fahrberechtigungskontrolle zwischen der kraftfahrzeugseitigen Sende-Empfangs-Einrichtung und dem in Schlüssel enthaltenen Transponder ausgelöst wird.

## Patentansprüche

1. Manuell betätigbarer Zündanlaßschalter für eine schlüssellose Motorstartberechtigungskontrolleinrichtung eines Kraftfahrzeuges mit einem Stellglied, durch das ein manuelles Starten und Stoppen des Motors sowie eine mechanische Ent- und Verriegelung der Drehbewegung des Lenkrades bewirkt werden kann, auf welches Stellglied nach einer Bewegung des Stellgliedes aus seiner Ausgangsstellung heraus zum Starten des Motors ein Sperriegel (3) einer ansteuerbaren Verriegelungseinrichtung (2) zum Sperren einer Zurückstellung des Stellgliedes in seine Ausgangsstellung dergestalt wirkt, daß eine Entriegelung zur Freigabe eines Zurückstellens des Stellgliedes in seine Ausgangsstellung von dem Vorhandensein eines von einer Betätigung des Stellgliedes unabhängigen Steuerbefehls erfolgt, wobei die Verriegelungseinrichtung (2) mit dem Sperriegel (3) gegen einen Anschlag des Stellgliedes wirkt, **dadurch gekennzeichnet, daß** das Stellglied einen mit einer vorbestimmten Kraft überwindbaren Anschlag aufweist, gegen den der Sperriegel der Verriegelungseinrichtung (2) nach einer Bewegung des Stellgliedes aus seiner Ausgangsstellung zum Starten des Motors zum Sperren der Zurückstellung des Stellgliedes in seine Ausgangsstellung wirkt.

2. Zündanlaßschalter nach Anspruch 1, **dadurch gekennzeichnet, daß** das Stellglied ausgehend von seiner Ausgangsstellung zunächst in Richtung seiner Längsachse bewegbar und anschließend um seine Längsachse drehbar ist und daß der Anschlag des Stellgliedes durch einen Anschlagnocken (1) mit einer Steuerflanke (6) zum Zurückbewegen des Sperriegels (3) der Verriegelungseinrichtung (2) gebildet und mit einem den überwindbaren Anschlag bildenden Federelement (4) versehen ist.

3. Zündanlaßschalter nach Anspruch 2, **dadurch gekennzeichnet, daß** das Federelement eine Blattfeder (4) ist.

4. Zündanlaßschalter nach Anspruch 3, **dadurch gekennzeichnet, daß** die Blattfeder (4) geschlitzt ist, wobei die Schlitzweite geringer als der Durchmesser des Sperriegels (3) der Verriegelungseinrichtung (2) ist, so daß der Sperriegel (3) nach Überwindung der Federkraft der Blattfeder (4) zwischen den beiden Blattfederhälften die Blattfeder (4) passieren kann.

5. Zündanlaßschalter nach einem der Ansprüche 1 bis 4, **dadurch gekennzeichnet, daß** das Stellglied der Starteinheit als Aufnahme zur Aufnahme einer Betätigungsgliedes, etwa eines Schlüssels ausgebildet ist.

## Claims

1. Manually operable ignition starter switch for a keyless engine start authentication control facility of a motor vehicle featuring an actuator by means of which a manual starting and stopping of the engine as well as a mechanical locking and unlocking of the rotary motion of the steering wheel can be effected, with a blocking member (3) of a triggerable interlocking device (2) for blocking the actuator from being restored to its initial position acting on the said actuator following a movement of the actuator from its initial position to start the engine in such a way that an unlocking for the purpose of releasing a restoration of the actuator to its initial position takes place independent of the existence of a control command, with the interlocking device (2) acting with its blocking member (3) against a limit stop of the actuator, **characterized by** the fact that the actuator features a limit stop that can be surmounted with a predetermined force and against which the blocking member of the interlocking device acts subsequent to a movement of the actuator from its initial position to start the engine for the purpose of blocking the restoration of the actuator to its initial position.

2. Ignition starter switch in accordance with Claim 1, **characterized by** the fact that the actuator starting from its initial position is first moveable in the direction of its longitudinal axis and that the limit stop of the actuator is formed by a stop cam (1) with a control edge (6) for the backward motion of the blocking member (3) of the interlocking device (2) and provided with a spring element (4) constituting the surmountable limit stop.

3. Ignition starter switch in accordance with Claim 2, **characterized by** the fact that the spring element is a leaf spring (4).

4. Ignition starter switch in accordance with Claim 3, **characterized by** the fact that the leaf spring (4) is slit, with the slit width being smaller than the diameter of the blocking member (3) of the interlocking device (2) so that the blocking member (3) can pass through the leaf spring (4) between the two leaf spring halves after surmounting the spring force of the leaf spring (4).

5. Ignition starter switch in accordance with any of Claims 1 to 4, **characterized by** the fact that the actuator of the starter unit is designed as a receptacle for holding an operating member, such as a key.

## Revendications

1. Contacteur d'allumage actionnable à la main pour un dispositif de contrôle d'autorisation de démarrage d'un moteur sans clé pour un véhicule automobile, avec un actionneur, à l'aide duquel un démarrage et un arrêt manuels du moteur ainsi qu'un déverrouillage et un verrouillage mécaniques du mouvement de rotation du volant peuvent être effectués, actionneur sur lequel, après un mouvement dudit actionneur à partir de sa position initiale, en vue du démarrage du moteur, un organe de blocage (3) d'un dispositif de verrouillage (2) excitable, empêchant le retour dudit actionneur à sa position initiale, agit de sorte qu'un déverrouillage en vue de la libération du retour dudit actionneur à sa position initiale a lieu en dépendance de la présence d'un ordre de commande, indépendant de l'actionnement de l'actionneur, le dispositif de verrouillage (2) avec l'organe de blocage (3) agissant contre une butée de l'actionneur, **caractérisé en ce que** l'actionneur présente une butée qui peut être surmontée par une force prédéterminée, contre laquelle agit l'organe de blocage du dispositif de verrouillage (2), après un mouvement de l'actionneur à partir de sa position initiale, pour le démarrage du moteur, pour bloquer le retour de l'actionneur à sa position initiale.

2. Contacteur d'allumage selon la revendication 1, **caractérisé en ce que** l'actionneur, à partir de sa position initiale, est d'abord mobile dans le sens de son axe longitudinal et, ensuite, pivoté autour de son axe longitudinal et que la butée de l'actionneur est formée par une came de butée (1) avec un flanc de commande (6) pour le mouvement rétrograde de l'organe de blocage (3) du dispositif de verrouillage (2) et est pourvue d'un élément élastique (4) qui forme la butée surmontable.

3. Contacteur d'allumage selon la revendication 2, **caractérisé en ce que** l'élément élastique est un ressort à lames (4).

4. Contacteur d'allumage selon la revendication 3, **caractérisé en ce que** le ressort à lames (4) est fendu, la largeur de fente étant plus petite que le diamètre de l'organe de blocage (3) du dispositif de verrouillage (2) de sorte que ledit organe de blocage (3), après avoir surmonté la force élastique du ressort à lames (4), peut passer entre les deux moitiés dudit ressort à lames (4).

5. Contacteur d'allumage selon l'une des revendications 1 à 4, **caractérisé en ce que** l'actionneur de l'unité de démarrage est conçu sous la forme d'un réceptacle pour accueillir un organe d'actionnement, comme une clé, par exemple.
